# EUROPEAN PATENT SPECIFICATION

(11) **EP 2 085 653 B1**
(45) Date of publication and mention of the grant of the patent: **11.03.2015**
(21) Application number: 09250264.0
(22) Date of filing: 30.01.2009
(51) Int. Cl.: F16H 37/06

(54) **Continuous variable transmission device with low shift transmission pulley train**
Stufenlose Getriebevorrichtung mit Rollenzug mit Schaltgetriebe mit niedrigen Gängen
Dispositif à transmission variable en continu doté d'un train de poulies de transmission de décalage faible

(30) Priority: 01.02.2008 US 6829 P
(43) Date of publication of application: 05.08.2009
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- CH-A- 470 607
- GB-A- 2 004 604
- GB-A- 2 025 545
- JP-A- 60 249 758
- JP-A- 61 096 253
- US-A- 3 926 020
- US-A- 4 294 137
- US-A- 5 088 352

## Description

### BACKGROUND OF THE INVENTION

### (a) Field of the invention

The operation schemes of continuous transmission for various known continuous variable transmission devices of different shafts type include:

The spacing between the variable spacing transmission V-belt grooves of driving and driven pulleys is modulated, whereby the operative belt transmission radial distance of driving pulley or driven pulley is changed to further change the transmission speed ratio between the driving pulley and the driven pulley;

The above said spacing modulation for variable spacing transmission V-belt grooves of driving or driven pulleys of the continuous variable transmission device is required to be driven by one or more than one kinds of axial driving forces including:
1. Through a variable centrifugal force generation mechanism by changes of the rotational speed of the input shaft to generate a variable axial driving force whereby to change the spacing of the transmission V-belt grooves of the driving pulley;
2. Through a variable centrifugal force generating mechanism by changes of the rotational speed of the output shaft to generate a variable axial driving force whereby to change the spacing of the transmission V-belt grooves of the driven pulley;
3. Through a variable axial driving force generating mechanism by changes of the output shaft torque to generate a variable axial driving force whereby to change the spacing of the transmission V-belt grooves of the driving pulley;
4. Through a variable axial driving force generating mechanism by changes of the output shaft torque to generate a variable axial driving force whereby to change the spacing of the transmission V-belt grooves of the driven pulley;
5. The driving or driven pulley is provided an axial pre-pressed spring, whereby the driving or driven pulley is pulled by the belt type transmission component to generate an axial driving force, whereby to change the variable spacing of the transmission V-belt grooves of both or either of the driving or driving pulley;

The above said 1~5 methods are passive operations of continuous variable transmission function.
6. A linear driving force actively generated manually, or by mechanical power, electromagnetic effect, hydraulically or pneumatically driven linear driving device; or a revolving kinetic energy generated by driving the electric motor, hydraulic motor or pneumatic motor is converted through a mechanical transmission device to an axial linear type driving force whereby to further change the spacing of variable spacing transmission V-belt grooves of both or either of the driving pulley or driven pulley. Said method is the active operation of continuous variable transmission.

### (b) Description of the prior art

Types of conventional continuous variable transmission devices of different input and output shafts structures are numerous including: rubber belt type, metal belt type, chain type, or electronic (ECVT) type, friction disk type or known continuous variable transmission device of different shafts type, etc.

US 3926020 discloses an automatic transmission for vehicles in which the speed ratio of the transmission is automatically adjusted in response to a control signal which is generated as a function of the speed of the drive system of the vehicle.

This document can be seen to disclose
a continuously-variable transmission device, having an input shaft and an output shaft, the device comprising:
a low shift transmission pulley train, which has a a driving pulley and a driven pulley, and
a unidirectional transmission device, arranged to rotate in the same direction as one of the pulleys of the pulley train;
wherein the low shift transmission pulley train and the unidirectional transmission device are installed between the input shaft and output shaft of the continuously variable transmission device; and
wherein, during high load operation, the revolving kinetic energy of the input shaft is transmitted through the unidirectional transmission device and the low shift transmission pulley train to drive the output shaft and further to drive a Ioad.

### SUMMARY OF THE INVENTION

The continuous variable transmission device with low shift transmission pulley train is passively operated by an axial driving force generated by operating torque by axially pre-pressed springs on the driven pulleys, thereby to modulate and operate the speed ratio of the continuous variable transmission thereof.

Although the continuous variable transmission devices of different shafts type is advantageous in convenient operation for its automatic speed ratio adjustment function according to the rotational speed change of the driving pulley input shaft and the size of loading torque at loading side, said continuous variable transmission device of different shafts type has the imperfections:
1. Due to low transmittable power, it is only suitable for middle to small power applications;
2. Transmission efficiency of the continuous variable transmission device of different shafts type is too low;
3. Durability enhancement is required.

The invented continuous variable transmission device with low shift transmission pulley train is innovatingly disclosed by the features of claim 1.

### BRIEF DESCRIPTION OF THE DRAWINGS

Fig. 1 is a structural schematic view showing that the invention is installed with a radial direction type unidirectional transmission device.
Fig. 2 is a structural schematic view showing that the invention is installed with an axial direction type unidirectional transmission device.
Fig. 3 is a structural schematic view of the invention showing that an unidirectional transmission device is installed between the driven pulley of the low shift transmission pulley train and the output shaft.
Fig. 4 is a structural schematic view showing that the low shift transmission pulley train of the invention is constituted by a driving chain pulley, a driven chain pulley and a transmission chain.
Fig. 5 is a structural schematic view showing that the low shift transmission pulley train is constituted by a driving pulley, a middle driven pulley and a driven pulley.
Fig. 6 is a structural schematic view showing that the low shift transmission pulley train is constituted by a smaller outer diameter transmission pulley and a larger outer diameter inner transmission pulley.
Fig. 7 is a structural schematic view showing that the low shift transmission pulley train is constituted by a driving belt pulley, a driven belt pulley and a transmission belt.
Fig. 8 is a structural schematic view of the invention showing that a speed change pulley train is installed between the input shaft and the driving pulley of the continuous variable transmission device of different shafts type.
Fig. 9 is a structural schematic view of the invention showing that a speed change pulley train is installed between the output shaft and the driven pulley of the continuous variable transmission device of different shafts type.
Fig. 10 is a structural schematic view of the invention showing that speed change pulley trains are installed between the input shaft and the driving pulley of the continuous variable transmission device of different shafts type and between the output shaft and the driven pulley of the continuous variable transmission device of different shafts type.

### DESCRIPTION OF MAIN COMPONENT SYMBOLS

- 100:: Continuous variable transmission device of different shafts type
- 101:: Input shaft
- 102:: Low shift transmission pulley train
- 103:: Output Shaft
- 111:: Unidirectional transmission device
- 302, 402:: Speed change pulley train
- 800:: Driving control device

### DETAILED DESCRIPTION OF THE PREFERRED EMBODIMENTS

The continuous variable transmission device with low shift transmission pulley train is passively operated by an axial driving force generated by operating torque to execute axial drive to the driven pulley and further provided with axially pre-pressed springs to constitute the continuous variable transmission function; and further referring to input preset operating modes, detected speeds and torques, etc. thereby to modulate and operate the speed ratio of the continuous variable transmission thereof.

Although the continuous variable transmission device of different shafts type is advantageous in convenient operation for its automatic speed ratio adjustment function according to the rotational speed change of the driving pulley input shaft and the size of the loading torque at loading side, said continuous variable transmission device of different shafts type has the imperfections:
1. Due to low transmittable power, it is only suitable for middle to small power applications;
2. Transmission efficiency of the continuous variable transmission device of different shafts type is too low;
3. Durability enhancement is required.

The invented continuous variable transmission device with low shift transmission pulley train is innovatingly disclosed by the features of claim 1.

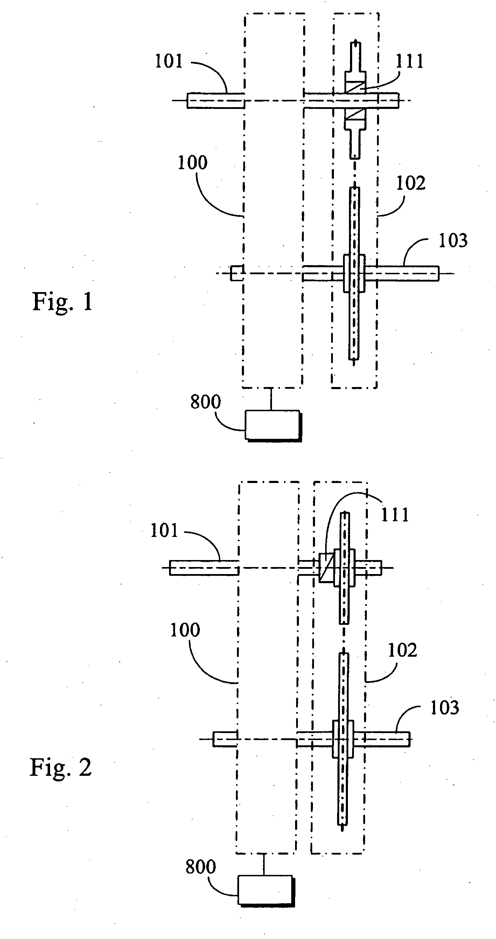

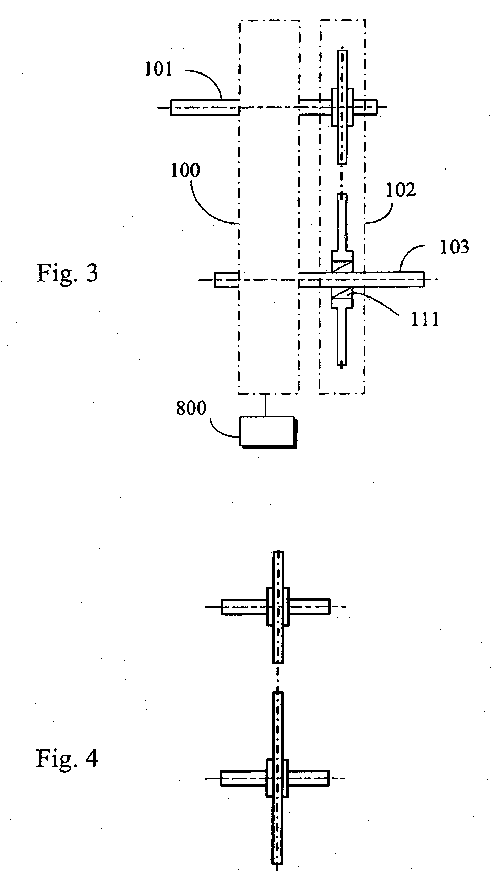

The continuous variable transmission device with low shift transmission pulley train is constituted by the following:
As shown in Fig. 1, besides the relevant mechanisms in the conventional continuous variable transmission devices, the continuous variable transmission device with low shift transmission pulley train is further mainly constituted by:
   - A continuous variable transmission device of different shafts type 100: It is a continuous variable transmission device of different input and output shafts structure comprises at least one kind of rubber belt type, metal belt type, chain type, or electronic (ECVT) type, friction disk type continuous variable transmission devices, wherein transmission speed ratio thereof is passively automatically modulated by following torque.
   - An input shaft 101: It is the rotating shaft to receive a revolving kinetic energy input, whereby said revolving kinetic energy is transmitted to the driving pulley of the continuous variable transmission device of different shafts type 100 and to the input end of the unidirectional transmission device 111;
   - An output shaft 103: it is a rotating shaft to provide revolving kinetic energy output for driving the load, whereby the revolving kinetic energy from driven pulley of the continuous variable transmission device of different shafts type 100 or from the driven pulley of low shift transmission pulley train 102 is transmitted by it to the load;
   - An unidirectional transmission device 111: It is constituted by an unidirectional transmission device in radial direction type as applied in Fig. 1 or an unidirectional transmission device in axial direction type as applied in Fig. 2, including the constitution by an unidirectional bearing with unidirectional transmission function, an unidirectional clutch or an unidirectional transmission mechanism or device, wherein said unidirectional transmission device 111 can be optionally installed as needed between the input shaft 101 and the driving pulley of low shift transmission pulley train 102, or installed as needed between the driven pulley of the low shift transmission pulley train 102 and the output shaft 103 as shown in Fig. 3;
      The transmission direction of the unidirectional transmission device 111 is that when rotational speed of the input shaft 101 is higher than that of the driving pulley of the low shift transmission pulley train 102 in the same revolving direction, the revolving kinetic energy is transmitted to the driving pulley of the low shift transmission pulley train 102; on the contrary, if it is not so, the revolving kinetic energy from the input shaft 101 is not transmitted to the driving pulley of low shift transmission pulley train 102;
   - The low shift transmission pulley train 102: It comprises a driving pulley which is driven by the input shaft 101 and a driven pulley for driving the output shaft 103, wherein said driving pulley and driven pulley are transmitted in the same revolving direction, the transmission speed ratio thereof appears a low shift transmission in decelerating transmission relative to the continuous variable transmission device of different shafts type 100, and the speed ratio relationship between the low shift transmission pulley train 102 and the continuous variable transmission device of different shafts type 100 is:
      1. Speed ratio of the driving pulley to drive the driven pulley of low shift transmission pulley train 102 ≤ speed ratio of the continuous variable transmission device of different shafts type 100 in low speed output;
      2. Speed ratio of the continuous variable transmission device of different shafts type 100 in low speed output < Speed ratio of the driving pulley to drive the driven pulley of low shift transmission pulley train 102 < speed ratio of the continuous variable transmission device of different shafts type 100 in high speed output;

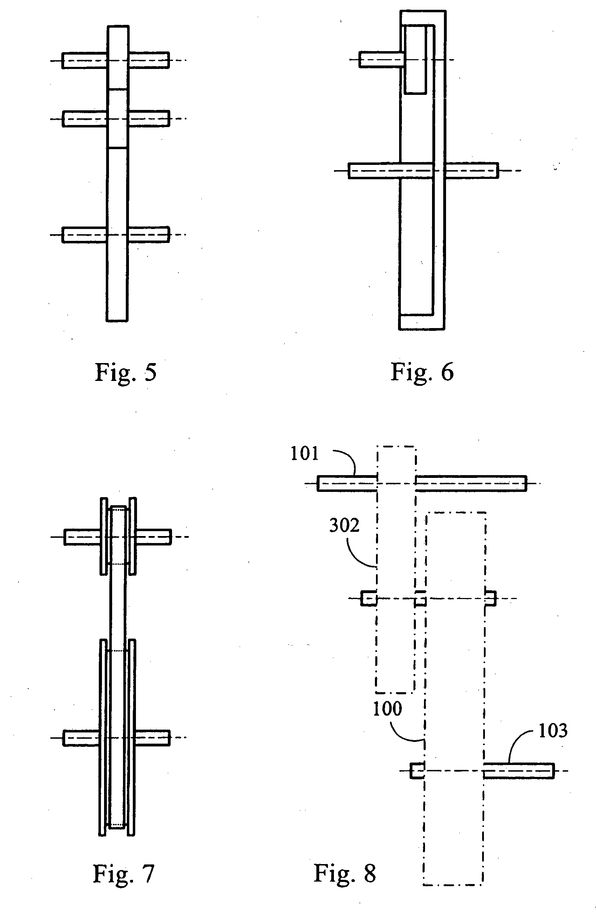

The low shift transmission pulley train 102 is constituted by the following:
1. It is constituted by a driving chain pulley, a driven chain pulley, and an attached transmission chain, wherein Fig. 4 is a structural schematic view showing that the low shift transmission pulley train 102 of the invention is constituted by a driving chain pulley, a driven chain pulley and an attached transmission chain; or
2. It is constituted by a driving pulley, a middle driven pulley and a driven pulley, wherein said driving pulley, middle driven pulley and driven pulley include constitutions by gears or friction pulleys. Fig. 5 is a structural schematic view showing that the low shift transmission pulley train 102 is constituted by a driving pulley, a middle driven pulley and a pulley; or
3. It is constituted by an inner gear train or an inner friction pulley train comprising a smaller outer diameter transmission pulley and a larger outer diameter inner transmission pulley. Fig. 6 is a structural schematic view showing that the low shift transmission pulley train 102 is constituted by a smaller outer diameter transmission pulley and a larger outer diameter inner transmission pulley; or
4. It is constituted by a driving belt pulley, a driven belt pulley and an attached transmission belt such as a canvas belt, a steel belt, or a chain belt. Fig. 7 is a structural schematic view showing that the low shift transmission pulley train 102 is constituted by a driving belt pulley, a driven belt pulley and a transmission belt.

The continuous variable transmission device with low shift transmission pulley train constituted by above said main structures includes that an input shaft 101 of the continuous variable transmission device of different shafts type 100 is additionally installed with a driving pulley of low shift transmission pulley train 102, and an unidirectional transmission device 111 is further installed between the two. Transmission direction of said unidirectional transmission device 111 shall allow said continuous variable transmission device of low shift transmission pulley train 102 to provide that: during higher load operation, if a decelerating type continuous variable transmission device is adopted by the continuous variable transmission device of differnet shafts type 100 to operate in a maximum deceleration speed ratio or a near maximum deceleration speed ratio status, or if an accelerating type continuous variable transmission device is adopted to operate in a minimum acceleration speed ratio or a near minimum deceleration speed ratio status, thereby to make the rotational speed of the driving pulley of low shift transmission pulley train 102 lower than that of the input shaft 101 in the same revolving direction, then the revolving kinetic energy of the input shaft 101 is transmitted through the unidirectional tansmission device 111 and the low shift transmission pulley train 102 to drive the output shaft 103 and further to drive the load. At said status, the power originally transmitted directly through said continuous variable transmission device of different shafts type 100 is changed to be transmitted through said low shift transmission pulley train 102 to further drive the output shaft 103. During lower load operation, the power is directly transmitted through said continuous variable transmission device of different shafts type 100 to drive the output shaft 103;

If an unidirectional transmission device 111 is selected to be installed between the driven pulley of low shift transmission pulley train 102 and the output shaft 103, then during higher load operation, if a decelerating type continuous variable transmission device is adopted by the continuous variable transmission device of differnet shafts type 100 to operate in a maximum deceleration speed ratio or a near maximum deceleration speed ratio status, or if an accelerating type continuous variable transmission device is adopted to operate in a minimum acceleration speed ratio or a near minimum deceleration speed ratio status, thereby to make rotational speed of the driven pulley of low shift transmission pulley train 102 higher than that of the output shaft 103 in the same revolving direction, then the revolving kinetic energy is transmitted through the low shift transmission pulley train 102 and the unidirectional tansmission device 111 to drive the output shaft 103 and further to drive the load. At said status, the power originally transmitted directly through said continuous variable transmission device of different shafts type 100 is changed to be transmitted through said low shift transmission pulley train 102 to further drive the output shaft 103. During lower load operation, the power is directly transmitted through said continuous variable transmission device of different shafts type 100 to drive the output shaft 103.

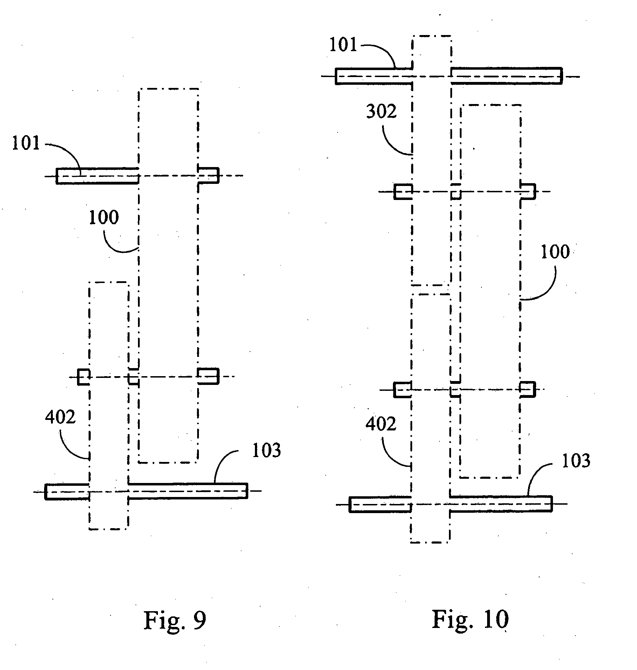

For sake of efficiency, when diameters of the driving pulley and the driven pulley in the continuous variable transmission device of differnet shafts type 100 of said continuous variable transmission device with low shift transmission pulley train are made more similar to each other to ensure a better efficiency, a middle transmission pulley for accelerating speed ratio or decelerating speed ratio can be installed to satisfy the needs for accelerating speed ratio or decelerating speed ratio in order to ensure a better transmission efficiency, wherein said middle transmission pulley includes:
1. A speed change pulley train 302 is further installed between the input shaft 101 and the driving pulley of continuous variable transmission device of different shafts type 100 to change the total speed ratio of the input shaft 101 and the output shaft 103 and is matched to required revolving direction. Fig. 8 is a structural schematic view of the invention showing that a speed change pulley train is installed between the input shaft 101 and the driving pulley of continuous variable transmission device of different shafts type 100; or
2. A speed change pulley train 402 is further installed between the output shaft 103 and the driven pulley of continuous variable transmission device of different shafts type 100 to change the total speed ratio of the input shaft 101 and the output shaft 103 and is matched to required revolving direction. Fig. 9 is a structural schematic view of the invention showing that a speed change pulley train is installed between the output shaft 103 and the driven pulley of continuous variable transmission device of different shafts type 100; or
3. The speed change pulley trains 302, 402 are simultaneously installed between the input shaft 101 and the driving pulley of continuous variable transmission device of different shafts type 100 and between the output shaft 103 and the driven pulley of continuous variable transmission device of different shafts type 100 to change the total speed ratio of the input shaft 101 through the continuous variable transmission device of different shafts type 100 to the output shaft 103 and are matched to required revolving direction. Fig. 10 is a structural schematic view of the invention showing that speed change pulley trains are installed between the input shaft 101 and the driving pulley of continuous variable transmission device of different shafts type 100 and between the output shaft 103 and the driven pulley of continuous variable transmission device of different shafts type 100;

The low shift transmission pulley train of said continuous variable transmission device with low shift transmission pulley train can be selected according to application requirements to include the following:
1. To be constituted by a single stage low shift transmission pulley train of fixed speed ratio;
2. To be constituted by a multi-stage type low shift variable transmission pulley train of manual shift or automatic transmission.

For said continuous variable transmission device with low shift transmission pulley train, input methods for supplying revolving kinetic energy to the input shaft 101 can be selected based on application requirements to include the following:
1. The input shaft 101 is for receiving direct revolving power source input from revolving power source such as engine, motor or generator or input from flywheel, wind power fan blades, gas or liquid turbines, or manual power, etc. ;
2. The revolving power sources as said in item 1 supplied to the input shaft 101 for output is first controlled by a clutching device before providing revolving kinetic energy output;
3. The revolving power sources as said in item 1 supplied to the input shaft 101 for output is further through a speed change device with fixed speed ratio, or a stepped or stepless speed change device of manual shift or automatic transmission, or a fluid transmission device, or an electromagnetic eddy current transmission device to provide revolving kinetic energy output;
4. The revolving power sources as said in item 1 supplied to the input shaft 101 for output is further through a clutching device and a speed change device with fixed speed ratio, or a stepped or stepless speed change device of manual shift or automatic transmission, or a fluid transmission device, or an electromagnetic eddy current transmission device to provide revolving kinetic energy output.

The revolving kinetic energy output from the output shaft 103 of said continuous variable transmission of low shift transmission pulley train can be selected according to application requirements to include the following:
1. The revolving kinetic energy output from the output shaft 103 is directly used to drive the load;
2. The revolving kinetic energy output from the output shaft 103 is through a clutching device to further drive the load;
3. The revolving kinetic energy from the output shaft 103 is through a speed change device with fixed speed ratio, or a stepless or stepped speed change device of manual shift or automatic transmission, or a fluid transmission device, or electromagnetic eddy current transmission device to further drive the load;
4. The revolving kinetic energy output from the output shaft 103 is through a clutching device and a speed change device with fixed speed ratio, or a stepless or stepped speed change device of manual shift or automatic transmission, or a fluid transmission device, or an electromagnetic eddy current transmission device to further drive the load.

The practical applied structures of said continuous variable transmission device of different shafts type 100 and said low shift transmission pulley train 102 can be selectively made to independently separated mechanical devices and combined afterwards for transmission or made to an integral structure or made to a structure of a common integrated mechanical device and a common integrated casing.

As summarized from above descriptions, said continuous variable transmission device with low shift transmission pulley train is characterized in that during high load operation, the kinetic energy is transmitted through said low shift transmission pulley train 102 to drive the output shaft 103 and to further drive the load, thereby to extend the service life of said continuous transmission device and to promote its loading efficiency.

A continuous variable transmission device with low shift transmission pulley train is innovatingly disclosed by that a low shift transmission pulley train with fixed speed ratio and attached unidirectional transmission device in the same revolving direction are installed between the input shaft and output shaft of a continuous variable transmission device, wherein if a decelerating type continuous variable transmission device is used to operated at maximum decelerating speed ratio or near maximum decelerating speed ratio status, or an accelerating type continuous variable transmission device is used to operate at minimum accelerating speed ratio or near minimum accelerating speed ratio status, then during high load operation, when the driving pulley rotational speed of low shift transmission pulley train is lower than that of the input shaft in the same revolving direction, the revolving kinetic energy of the input shaft is transmitted through the unidirectional transmission device and the low shift transmission pulley train to drive the output shaft and further to drive the load; at said status, the power originally transmitted through the continuous variable transmission device of different shafts type is changed to be transmitted through the low shift transmission pulley train.

In a preferred embodiment, a continuous variable transmission device of different input and output shafts structure comprises at least one kind of rubber belt type, metal belt type, chain type, or electronic (ECVT) type, friction disk type continuous variable transmission devices, wherein transmission speed ratio thereof can be either passively automatically modulated by following torque or following rotational speed; or actively modulated by applying a linear driving force either generated by an externally powered linear driving device or by a revolving driving device via mechanical transmission for conversion to change spacing between the transmission V-belt grooves of both or either of driving and driven pulleys.

Preferably, an input shaft (101) is arranged to receive a revolving kinetic energy input, whereby said revolving kinetic energy is transmitted to the driving pulley of the continuous variable transmission device of different shafts type (100) and to the input end of the unidirectional transmission device (111).

Advantageously, an output shaft (103) is arranged to provide revolving kinetic energy output for driving the load, whereby the revolving kinetic energy from driven pulley of the continuous variable transmission device of different shafts type (100) or from the driven pulley of low shift transmission pulley train (102) is transmitted by it to the load.

Preferably, a unidirectional transmission device (111) is constituted by an unidirectional transmission device in radial direction type or an unidirectional transmission device in axial direction type, including the constitution by an unidirectional bearing with unidirectional transmission function, an unidirectional clutch or an unidirectional transmission mechanism or device, wherein said unidirectional transmission device (111) can be optionally installed as needed between the input shaft (101) and the driving pulley of low shift transmission pulley train (102), or installed as needed between the driven pulley of the low shift transmission pulley train (102) and the output shaft (103).

Advantageously, the transmission direction of the unidirectional transmission device (111) is that when rotational speed of the input shaft (101) is higher than that of the driving pulley of the low shift transmission pulley train (102) in the same revolving direction, the revolving kinetic energy is transmitted to the driving pulley of the low shift transmission pulley train (102); on the contrary, if it is not so, the revolving kinetic energy from the input shaft (101) is not transmitted to the driving pulley of low shift transmission pulley train (102).

Preferably, the low shift transmission pulley train (102) comprises a driving pulley which is driven by the input shaft (101) and a driven pulley for driving the output shaft (103), wherein said driving pulley and driven pulley are transmitted in the same revolving direction, the transmission speed ratio thereof appears a low shift transmission in decelerating transmission relative to the continuous variable transmission device of different shafts type (100), and the speed ratio relationship between the low shift transmission pulley train (102) and the continuous variable transmission device of different shafts type (100) is:
1) Speed ratio of the driving pulley to drive the driven pulley of low shift transmission pulley train (102) ≤ speed ratio of the continuous variable transmission device of different shafts type (100) in low speed output;
2) Speed ratio of the continuous variable transmission device of different shafts type (100) in low speed output < Speed ratio of the driving pulley to drive the driven pulley of low shift transmission pulley train (102) < speed ratio of the continuous variable transmission device of different shafts type (100) in high speed output.

Advantageously, the low shift transmission pulley train (102) is constituted by the following:
-- It is constituted by a driving chain pulley, a driven chain pulley, and an attached transmission chain;
-- It is constituted by a driving pulley, a middle driven pulley and a driven pulley, wherein said driving pulley, middle driven pulley and driven pulley include constitutions by gears or friction pulleys;
-- It is constituted by an inner gear train or an inner friction pulley train comprising a smaller outer diameter transmission pulley and a larger outer diameter inner transmission pulley;
-- It is constituted by a driving belt pulley, a driven belt pulley and an attached transmission belt such as a canvas belt, a steel belt, or a chain belt.

The input methods for supplying revolving kinetic energy to the input shaft (101) may be selected based on application requirements to include one or more than one following inputting methods:
1) The input shaft (101) is for receiving direct revolving power source input from revolving power source such as engine, motor or generator or input from flywheel, wind power fan blades, gas or liquid turbines, or manual power;
2) The revolving power sources as said in item 1) supplied to the input shaft (101) for output is first controlled by a clutching device before providing revolving kinetic energy output;
3) The revolving power sources as said in item 1) supplied to the input shaft (101) for output is further through a speed change device with fixed speed ratio, or a stepped or stepless speed change device of manual shift or automatic transmission, or a fluid transmission device, or an electromagnetic eddy current transmission device to provide revolving kinetic energy output;
4) The revolving power sources as said in item 1) supplied to the input shaft (101) for output is further through a clutching device and a speed change device with fixed speed ratio, or a stepped or stepless speed change device of manual shift or automatic transmission, or a fluid transmission device, or an electromagnetic eddy current transmission device to provide revolving kinetic energy output.

The revolving kinetic energy output from the output shaft (103) may be selected according to application requirements to include one or more than one outputting methods as following:
1) The revolving kinetic energy output from the output shaft (103) is directly used to drive the load;
2) The revolving kinetic energy output from the output shaft (103) is through a clutching device to further drive the load;
3) The revolving kinetic energy from the output shaft (103) is through a speed change device with fixed speed ratio, or a stepless or stepped speed change device of manual shift or automatic transmission, or a fluid transmission device, or electromagnetic eddy current transmission device to further drive the load;
4) The revolving kinetic energy output from the output shaft (103) is through a clutching device and a speed change device with fixed speed ratio, or a stepless or stepped speed change device of manual shift or automatic transmission, or a fluid transmission device, or an electromagnetic eddy current transmission device to further drive the load.

The practical applied structures of said continuous variable transmission device of different shafts type (100) and said low shift transmission pulley train (102) can be selectively made to independently separated mechanical devices and combined afterwards for transmission or made to an integral structure or made to a structure of a common integrated mechanical device and a common integrated casing.

## Claims

1. A transmission device, having an input shaft (101) and an output shaft (103), the device comprising:
a continuously-variable transmission device (100);
a low shift fixed-speed ratio transmission pulley train (102) having a driving pulley and a driven pulley; and
a unidirectional transmission device (111), arranged to rotate in the same direction as one of the pulleys of the pulley train (102);
wherein the low shift fixed-speed ratio transmission pulley train (102) and the unidirectional transmission device (111) are installed between the input shaft (101) and output shaft (103); and
wherein the continuously variable transmission device is installed between the input shaft (101) and the output shaft (103) so as to transmit power directly from the input shaft (101) to the output shaft (103) and is provided with axially pre-pressed springs at a driven pulley to constitute the continuous variable transmission function;
wherein, the transmission speed ratio of the continuously variable transmission device (100) is passively automatically modulated by following torque, such that when driving the output shaft by means of the continuously variable transmission device (100) and the load becoming a high load operation, and when the speed of rotation of the driving pulley of the low shift fixed-speed ratio transmission pulley train (102) is lower than that of the input shaft (101), the revolving kinetic energy of the input shaft (101) is transmitted through the unidirectional transmission device (111) and the low shift fixed-speed ratio transmission pulley train (102) to drive the output shaft (103) and further to drive a load.

2. A transmission device according to claim 1, further comprising at least one friction disk, wherein the friction disk is one or more of the following types: rubber belt type, metal belt type, chain type, and electronic (ECVT) type.

3. A transmission device according to any one of the preceding claims, wherein the input shaft is arranged to receive a kinetic energy input, whereby said kinetic energy is transmitted to a driving pulley of the continuously-variable transmission device (100) and to an input end of the unidirectional transmission device (111).

4. A transmission device according to any one of the preceding claims, wherein the output shaft is arranged to provide kinetic energy output for driving the load, whereby the kinetic energy from a driven pulley of the continuously-variable transmission device (100), or from a driven pulley of low shift transmission pulley train (102), is transmitted by the output shaft to the load.

5. A transmission device according to any one of the preceding claims, wherein the unidirectional transmission device (111) is of the radial direction type or of the axial direction type, and includes a unidirectional bearing with unidirectional transmission function, a unidirectional clutch or a unidirectional transmission mechanism, wherein said unidirectional transmission device (111) is installed between the input shaft (101) and the driving pulley of low shift transmission pulley train (102), or between the driven pulley of the low shift transmission pulley train (102) and the output shaft (103).

6. A transmission device according to any one of the preceding claims, where, when in the rotational speed of the input shaft (101) is higher than that of the driving pulley of the low shift transmission pulley train (102) in the same revolving direction, the revolving kinetic energy is transmitted to the driving pulley of the low shift transmission pulley train (102) and, when the rotational speed is not higher than that of the driving pulley of the low shift transmission pulley train, the revolving kinetic energy from the input shaft (101) is not transmitted to the driving pulley of low shift transmission pulley train (102).

7. A transmission device according to any one of the preceding claims, wherein the low shift transmission pulley train (102) comprises a driving pulley which is driven by the input shaft (101) and a driven pulley for driving the output shaft (103), wherein said driving pulley and driven pulley are transmitted in the same revolving direction; and wherein the transmission speed ratio thereof appears a low shift transmission in decelerating transmission relative to the continuously- variable transmission device of different shafts type (100), and the speed ratio relationship between the low shift transmission pulley train (102) and the continuously-variable transmission device of different shafts type (100) is:
1) Speed ratio of the driving pulley to drive the driven pulley of low shift transmission pulley train (102) ≦ speed ratio of the continuously-variable transmission device of different shafts type (100) in low speed output;
2) Speed ratio of the continuously-variable transmission device of different shafts type (100) in low speed output < Speed ratio of the driving pulley to drive the driven pulley of low shift transmission pulley train (102) < speed ratio of the continuously-variable transmission device of different shafts type (100) in high speed output.

8. A transmission device according to any one of the preceding claims, wherein the low shift transmission pulley train (102) includes one or more of the following:
-- a driving chain pulley, a driven chain pulley, and an attached transmission chain;
-- a driving pulley, a middle driven pulley and a driven pulley, wherein said driving pulley, middle driven pulley and driven pulley include constitutions by gears or friction pulleys;
-- an inner gear train or an inner friction pulley train comprising a smaller outer diameter transmission pulley and a larger outer diameter inner transmission pulley; and
-- a driving belt pulley, a driven belt pulley and an attached transmission belt such as a canvas belt, a steel belt, or a chain belt.

9. A transmission device with low shift transmission pulley train according to any one of the preceding claims, wherein it includes that an input shaft (101) of the continuously-variable transmission device of different shafts type (100) is additionally installed with a driving pulley of low shift transmission pulley train (102), and an unidirectional transmission device (111) is further installed between the two; transmission direction of said unidirectional transmission device (111) shall allow said continuously-variable transmission device of low shift transmission pulley train (102) to provide that: during higher load operation, if a decelerating type continuously-variable transmission device is adopted by the continuously-variable transmission device of differnet shafts type (100) to operate in a maximum deceleration speed ratio or a near maximum deceleration speed ratio status, or if an accelerating type continuously-variable transmission device is adopted to operate in a minimum acceleration speed ratio or a near minimum deceleration speed ratio status, thereby to make the rotational speed of the driving pulley of low shift transmission pulley train (102) lower than that of the input shaft (101) in the same revolving direction, then the revolving kinetic energy of the input shaft (101) is transmitted through the unidirectional tansmission device (111) and the low shift transmission pulley train (102) to drive the output shaft (103) and further to drive the load; at said status, the power originally transmitted directly through said continuously-variable transmission device of different shafts type (100) is changed to be transmitted through said low shift transmission pulley train (102) to further drive the output shaft (103); during lower load operation, the power is directly transmitted through said continuously-variable transmission device of different shafts type (100) to drive the output shaft (103).

10. A transmission device with low shift transmission pulley train according to any one of the preceding claims, wherein if an unidirectional transmission device (111) is selected to be installed between the driven pulley of low shift transmission pulley train (102) and the output shaft (103), then during higher load operation, if a decelerating type continuously-variable transmission device is adopted by the continuously-variable transmission device of differnet shafts type (100) to operate in a maximum deceleration speed ratio or a near maximum deceleration speed ratio status, or if an accelerating type continuously-variable transmission device is adopted to operate in a minimum acceleration speed ratio or a near minimum deceleration speed ratio status, thereby to make rotational speed of the driven pulley of low shift transmission pulley train (102) higher than that of the output shaft (103) in the same revolving direction, then the revolving kinetic energy is transmitted through the low shift transmission pulley train (102) and the unidirectional tansmission device (111) to drive the output shaft (103) and further to drive the load; at said status, the power originally transmitted directly through said continuously-variable transmission device of different shafts type (100) is changed to be transmitted through said low shift transmission pulley train (102) to further drive the output shaft (103); during lower load operation, the power is directly transmitted through said continuously-variable transmission device of different shafts type (100) to drive the output shaft (103).

11. A transmission device with low shift transmission pulley train according to any one of the preceding claims, wherein for sake of efficiency, when diameters of the driving pulley and the driven pulley in the continuously-variable transmission device of differnet shafts type (100) of said continuously-variable transmission device with low shift transmission pulley train are made more similar to each other to ensure a better efficiency, a middle transmission pulley for accelerating speed ratio or decelerating speed ratio can be installed to satisfy the needs for accelerating speed ratio or decelerating speed ratio in order to ensure a better transmission efficiency, wherein said middle transmission pulley includes:
1) A speed change pulley train (302) is further installed between the input shaft (101) and the driving pulley of continuously-variable transmission device of different shafts type (100) to change the total speed ratio of the input shaft (101) and the output shaft (103) and is matched to required revolving direction;
2) A speed change pulley train (402) is further installed between the output shaft (103) and the driven pulley of continuously-variable transmission device of different shafts type (100) to change the total speed ratio of the input shaft (101) and the output shaft (103) and is matched to required revolving direction;
3) The speed change pulley trains (302, 402) are simultaneously installed between the input shaft (101) and the driving pulley of continuously-variable transmission device of different shafts type (100) and between the output shaft (103) and the driven pulley of continuously-variable transmission device of different shafts type (100) to change the total speed ratio of the input shaft (101) through the continuously-variable transmission device of different shafts type (100) to the output shaft (103) and are matched to required revolving direction.

12. A transmission device with low shift transmission pulley train according to any one of the preceding claims, wherein the low shift transmission pulley train can be selected according to application requirements to include one or more than one following constitution methods:
1) To be constituted by a single stage low shift transmission pulley train of fixed speed ratio;
2) To be constituted by a multi-stage type low shift variable transmission pulley train of manual shift or automatic transmission.

## Patentansprüche

1. Getriebeeinheit mit einer Eingangswelle (101) und einer Ausgangswelle (103), wobei die Einheit umfasst:
eine stufenlose Getriebeeinheit (100);
einen Scheibenzug (102) mit Niedriggang-Getriebe mit festem Übersetzungsverhältnis, der eine treibende Scheibe und eine angetriebene Scheibe aufweist; und
eine unidirektionale Getriebeeinheit (111), die so ausgelegt ist, dass sie sich in die gleiche Richtung wie eine der Scheiben des Scheibenzugs (102) dreht;
wobei der Scheibenzug (102) mit Niedriggang-Getriebe mit festem Übersetzungsverhältnis und die unidirektionale Getriebeeinheit (111) zwischen der Eingangswelle (101) und der Ausgangswelle (103) installiert sind; und
wobei die stufenlose Getriebeeinheit zwischen der Eingangswelle (101) und der Ausgangswelle (103) installiert ist, um eine Leistung direkt von der Eingangswelle (101) auf die Ausgangswelle (103) zu übertragen, und mit axial vorgedrückten Federn an einer angetriebenen Scheibe versehen ist, um die Funktion des stufenlosen Getriebes zu bilden;
wobei das Getriebeübersetzungsverhältnis der stufenlosen Getriebeeinheit (100) gemäß Drehmoment automatisch passiv moduliert wird, so dass, wenn die Ausgangswelle mithilfe der stufenlosen Getriebeeinheit (100) angetrieben wird und die Last zu einem Hochlastbetrieb wird und wenn die Drehzahl der antreibenden Scheibe des Scheibenzugs (102) mit Niedriggang-Getriebe mit festem Übersetzungsverhältnis geringer als jene der Eingangswelle (101) ist, wird die kinetische Drehenergie der Eingangswelle (101) über die unidirektionale Getriebeeinheit (111) und den Scheibenzug (102) mit Niedriggang-Getriebe mit festem Übersetzungsverhältnis übertragen, um die Ausgangswelle (103) anzutreiben und darüber hinaus um eine Last anzutreiben.

2. Getriebeeinheit nach Anspruch 1, die darüber hinaus zumindest eine Reibscheibe umfasst, wobei die Reibscheibe ein oder mehrere der folgenden Typen ist: Gummiriementyp, Metallriementyp, Kettentyp und elektronischer (ECVT-)Typ.

3. Getriebeeinheit nach einem der vorstehenden Ansprüche, wobei die Eingangswelle so ausgelegt ist, dass sie einen kinetischen Energieeingang aufnimmt, wodurch die kinetische Energie an eine antreibende Riemenschreibe der stufenlosen Getriebeeinheit (100) und an ein Eingangsende der unidirektionalen Getriebeeinheit (111) übertragen wird.

4. Getriebeeinheit nach einem der vorstehenden Ansprüche, wobei die Ausgangswelle so ausgelegt ist, dass sie einen kinetischen Energieausgang zum Antreiben der Last bereitstellt, wodurch die kinetische Energie von einer angetriebenen Scheibe der stufenlosen Getriebeeinheit (100) oder von einer angetriebenen Scheibe des Scheibenzugs (102) mit Niedriggang-Getriebe von der Ausgangswelle an die Last übertragen wird.

5. Getriebeeinheit nach einem der vorstehenden Ansprüche, wobei die unidirektionale Getriebeeinheit (111) vom Radialrichtungstyp oder vom Axialrichtungstyp ist und ein unidirektionales Lager mit einer unidirektionalen Getriebefunktion, eine unidirektionale Kupplung oder einen Getriebemechanismus enthält, wobei die unidirektionale Getriebeeinheit (111) zwischen der Eingangswelle (101) und der antreibenden Scheibe des Scheibenzugs (102) mit Niedriggang-Getriebe oder zwischen der angetriebenen Scheibe des Scheibenzugs (102) mit Niedriggang-Getriebe mit der Ausgangswelle (103) installiert ist.

6. Getriebeeinheit nach einem der vorstehenden Ansprüche, wobei die kinetische Drehenergie, wenn die Drehzahl der Eingangswelle (101) höher als jene der antreibenden Scheibe des Scheibenzugs (102) mit Niedriggang-Getriebe in der gleichen Drehrichtung ist, an die antreibende Scheibe des Scheibenzugs (102) mit Niedriggang-Getriebe übertragen wird, und die kinetische Drehenergie, wenn die Drehgeschwindigkeit nicht höher als jene der antreibenden Scheibe des Scheibenzugs mit Niedriggang-Getriebe ist, von der Eingangswelle (101) nicht an die antreibende Scheibe des Scheibenzugs (102) mit Niedriggang-Getriebe übertragen wird.

7. Getriebeeinheit nach einem der vorstehenden Ansprüche, wobei der Scheibenzug (102) mit Niedriggang-Getriebe eine antreibende Scheibe, die von der Eingangswelle (101) angetrieben wird, und eine angetriebene Scheibe zum Antreiben der Ausgangswelle (103) umfasst, wobei die antreibende Scheibe und die angetriebene Scheibe in die gleiche Drehrichtung übertragen werden; und wobei sich deren Getriebeübersetzungsverhältnis als Niedriggang-Getriebe beim Entschleunigen der Übersetzung in Bezug auf die stufenlose Getriebeeinheit unterschiedlichen Wellentyps (100) zeigt und das Übersetzungsverhältnis zwischen dem Scheibenzug (102) mit Niedriggang-Getriebe mit der stufenlosen Getriebeeinheit unterschiedlichen Wellentyps (100) ist:
1) Übersetzungsverhältnis der antreibenden Scheibe zum Antrieben der angetriebenen Scheibe des Scheibenzugs (102) mit Niedriggang-Getriebe ≦ Übersetzungsverhältnis der stufenlosen Getriebeeinheit unterschiedlichen Wellentyps (100) bei Ausgang mit niedriger Drehzahl;
2) Übersetzungsverhältnis der stufenlosen Getriebeeinheit unterschiedlichen Wellentyps (100) bei Ausgang mit geringer Drehzahl < Übersetzungsverhältnis der antreibenden Scheibe zum Antreiben der angetriebenen Scheibe des Scheibenzugs (102) mit geringer Gangübersetzung < Übersetzungsverhältnis der stufenloses Getriebeeinheit unterschiedlichen Wellentyps (100) bei Ausgang mit hoher Drehzahl.

8. Getriebeeinheit nach einem der vorstehenden Ansprüche, wobei der Scheibenzug (102) mit Niedriggang-Getriebe eines oder mehrere des Folgenden enthält:
- eine antreibende Kettenscheibe, eine angetriebene Kettenscheibe und eine angebrachte Antriebskette;
- eine antreibende Scheibe, eine mittlere angetriebene Scheibe und eine angetriebene Scheibe, wobei die antreibende Scheibe, die mittlere angetriebene Scheibe und die angetriebene Scheibe Ausbildungen durch Zahnräder oder Reibscheiben enthalten;
- einen inneren Rädertrieb oder einen inneren Reibscheibenzug, der eine Getriebescheibe mit einem kleineren Außendurchmesser und eine innere Getriebescheibe mit größerem Außendurchmesser; und
- einen antreibende Riemenscheibe, eine angetriebene Riemenscheibe und einen angebrachten Getrieberiemen, z. B. eine Geweberiemen, einen Stahlriemen oder einen Kettenriemen.

9. Getriebeeinheit mit Scheibenzug mit Niedriggang-Getriebe nach einem der vorstehenden Ansprüche, wobei sie umfasst, dass eine Eingangswelle (101) der stufenlosen Getriebeeinheit unterschiedlichen Wellentyps (100) außerdem mit einer antreibenden Scheibe eines Scheibenzugs (102) mit Niedriggang-Getriebe installiert ist und eine unidirektionale Getriebeeinheit (111) darüber hinaus zwischen den beiden installiert ist; wobei die Übersetzungsrichtung der unidirektionalen Getriebeeinheit (111) ermöglicht, dass die stufenlose Getriebeeinheit des Scheibenzugs (102) mit Niedriggang-Getriebe vorsieht, dass: während eines Betriebs mit höherer Last, wenn eine stufenlose Getriebeeinheit vom Entschleunigungstyp von der stufenlosen Getriebeeinheit unterschiedlichen Wellentyps (100) angenommen wird, um in einem Status eines Übersetzungsverhältnisses mit maximaler Entschleunigung oder eines Übersetzungsverhältnisses mit beinahe maximaler Entschleunigung zu arbeiten, oder wenn eine stufenlose Getriebeeinheit vom Beschleunigungstyp angenommen wird, um in einem Status eines Übersetzungsverhältnisses mit minimaler Beschleunigung oder eines Übersetzungsverhältnisses mit beinahe minimaler Entschleunigung zu arbeiten, wodurch die Drehzahl der antreibenden Scheibe des Scheibenzugs (102) mit Niedriggang-Getriebe geringer als jene der Eingangswelle (101) in der gleichen Drehrichtung ist, die kinetische Drehenergie der Eingangswelle (101) durch die unidirektionale Getriebeeinheit (111) und den Scheibenzug (102) mit Niedriggang-Getriebe übertragen wird, um die Ausgangswelle (103) anzutreiben und darüber hinaus die Last anzutreiben; wobei in diesem Status die Leistung, die ursprünglich direkt durch die stufenlose Getriebeeinheit unterschiedlichen Wellentyps (100) übertragen wird, so geändert wird, dass sie über den Scheibenzug (102) mit Niedriggang-Getriebe übertragen wird, um die Ausgangswelle (103) darüber hinaus anzutreiben.; während eines Betriebs mit geringerer Last die Leistung direkt über die stufenlose Getriebeeinheit unterschiedlichen Wellentyps (100) angetrieben wird, um die Ausgangswelle (103) anzutreiben.

10. Getriebeeinheit mit Scheibenzug mit Niedriggang-Getriebe nach einem der vorstehenden Ansprüche, wobei, wenn eine unidirektionale Getriebeeinheit (111) so gewählt ist, dass siezwischen der angetriebenen Scheibe eines Scheibenzugs (102) mit Niedriggang-Getriebe und der Ausgangswelle (103) installiert wird, während eines Betriebs mit höherer Last, wenn eine stufenlose Getriebeeinheit vom Entschleunigungstyp von der stufenlosen Getriebeeinheit unterschiedlichen Wellentyps (100) angenommen wird, um einen Status eines Übersetzungsverhältnisses maximaler Entschleunigung oder eines Übersetzungsverhältnisses beinahe maximaler Entschleunigung angenommen wird, oder wenn eine stufenlose Getriebeeinheit vom Beschleunigungstyp angenommen wird, um in einem Status eines Übersetzungsverhältnisses minimaler Beschleunigung oder eines Übersetzungsverhältnisses minimaler Entschleunigung zu arbeiten, um dadurch die Drehgeschwindigkeit der angetriebenen Scheibe des Scheibenzugs (102) mit Niedriggang-Getriebe höher als jene der Ausgangswelle (103) in der gleichen Drehrichtung zu machen, die kinetische Drehenergie durch den Scheibenzug (102) mit Niedriggang-Getriebe mit die unidirektionale Getriebeeinheit (1110) übertragen wird, um die Ausgangswelle (103) anzutreiben und darüber hinaus die Last anzutreiben; in diesem Status die Leistung, die ursprünglich direkt durch die stufenlose Getriebeeinheit unterschiedlichen Wellentyps (100) übertragen wurde, so verändert wird, dass sie durch den Scheibenzug (102) mit Niedriggang-Getriebe übertragen wird, um die Ausgangswelle (103) weiter anzutreiben; während eines Betriebs mit geringerer Last die Leistung direkt über die stufenlose Getriebeeinheit unterschiedlichen Wellentyps (100) übertragen wird, um die Ausgangswelle (103) anzutreiben.

11. Getriebeeinheit mit Scheibenzug mit Niedriggang-Getriebe nach einem der vorstehenden Ansprüche, wobei aus Effizienzgründen, wenn Durchmesser der antreibenden Scheibe und der angetriebenen Scheibe in der stufenlosen Getriebeeinheit unterschiedlichen Wellentyps (100) der stufenlosen Getriebeeinheit mit Scheibenzug mit Niedriggang-Getriebe einander ähnlicher gemacht werden, um eine bessere Effizienz zu gewährleisten, eine mittlere Getriebescheibe zum Beschleunigen des Übersetzungsverhältnisses oder Entschleunigen des Übersetzungsverhältnisses installiert werden kann, um die Anforderungen zum Beschleunigen eines Übersetzungsverhältnisses oder Entschleunigen eines Übersetzungsverhältnisses zu erfüllen, um eine bessere Getriebeeffizienz zu gewährleisten, wobei die mittlere Getriebescheibe umfasst, dass:
1) ein Drehzahländerungs-Scheibenzug (302) darüber hinaus zwischen der Eingangswelle (102) und der antreibenden Scheibe der stufenlosen Getriebeeinheit unterschiedlichen Wellentyps (100) installiert ist, um das Gesamtübersetzungsverhältnis der Eingangswelle (101) und der Ausgangswelle (103) zu ändern, und an die erforderliche Drehrichtung angepasst ist;
2) ein Drehzahländerungs-Scheibenzug (402) darüber hinaus zwischen der Ausgangswelle (102) und der angetriebenen Scheibe der stufenlosen Getriebeeinheit unterschiedlichen Wellentyps (100) installiert ist, um das Gesamtübersetzungsverhältnis der Eingangswelle (103) und der Ausgangswelle (103) zu ändern, und an die erforderliche Drehrichtung angepasst ist;
3) die Drehzahländerungs-Scheibenzüge (302, 402) gleichzeitig zwischen der Eingangswelle (101) und der antreibenden Scheibe der stufenlosen Getriebeeinheit unterschiedlichen Wellentyps (100) und zwischen der Ausgangswelle (103) und der angetriebenen Scheibe der stufenlosen Getriebeeinheit unterschiedlichen Wellentyps installiert sind, um das Gesamtübersetzungsverhältnis der Eingangswelle (101) zur Ausgangswelle (103) zu ändern und an die erforderliche Drehrichtung angepasst sind.

12. Getriebeeinheit mit Scheibenzug mit Niedriggang-Getriebe nach einem der vorstehenden Ansprüche, wobei der Scheibenzug mit Niedriggang-Getriebe gemäß Anwendungsanforderungen so gewählt werden kann, dass er eines oder mehrere der folgenden Ausbildungsverfahren umfasst:
1) Ausbildung als Scheibenzug mit festem Übersetzungsverhältnis und einstufigem Niedriggang-Getriebe;
2) Ausbildung als Scheibenzug mit manuellem Gangwechsel oder Automatikgetriebe mit variablem Niedriggang-Getriebe vom Mehrstufentyp.

## Revendications

1. Dispositif de transmission, ayant un arbre d'entrée (101) et un arbre de sortie (103), le dispositif comprenant :
un dispositif de transmission à variation continue (100) ;
un train de poulies de transmission à rapport de vitesse fixe de décalage faible (102) ayant une poulie d'entraînement et une poulie entraînée ; et
un dispositif de transmission unidirectionnelle (111), agencé pour tourner dans le même sens que l'une des poulies du train de poulies (102) ;
le train de poulies de transmission à rapport de vitesse fixe de décalage faible (102) et le dispositif de transmission unidirectionnelle (111) étant installés entre l'arbre d'entrée (101) et l'arbre de sortie (103) ; et
le dispositif de transmission à variation continue étant installé entre l'arbre d'entrée (101) et l'arbre de sortie (103) de façon à transmettre de la puissance directement de l'arbre d'entrée (101) à l'arbre de sortie (103) et comportant des ressorts axialement pré-contraints au niveau d'une poulie entraînée pour constituer la fonction de transmission à variation continue ;
le rapport de vitesse de transmission du dispositif de transmission à variation continue (100) étant automatiquement modulé de façon passive par un couple de suivi de telle sorte que, lors de l'entraînement de l'arbre de sortie au moyen du dispositif de transmission à variation continue (100) et lorsque la charge devient un fonctionnement à charge élevée, et lorsque la vitesse de rotation de la poulie d'entraînement du train de poulies de transmission à rapport de vitesse fixe de décalage faible (102) est inférieure à celle de l'arbre d'entrée (101), l'énergie cinétique de rotation de l'arbre d'entrée (101) est transmise au moyen du dispositif de transmission unidirectionnelle (111) et du train de poulies de transmission à rapport de vitesse fixe de décalage faible (102) pour entraîner l'arbre de sortie (103) ainsi que pour entraîner une charge.

2. Dispositif de transmission selon la revendication 1, comprenant en outre au moins un disque de friction, le disque de friction étant un ou plusieurs des types suivants : du type courroie en caoutchouc, du type courroie métallique, du type chaîne et du type électronique (ECVT).

3. Dispositif de transmission selon l'une quelconque des revendications précédentes, dans lequel l'arbre d'entrée est agencé pour recevoir une entrée d'énergie cinétique, ladite énergie cinétique étant transmise à une poulie d'entraînement du dispositif de transmission à variation continue (100) et à une extrémité d'entrée du dispositif de transmission unidirectionnelle (111).

4. Dispositif de transmission selon l'une quelconque des revendications précédentes, dans lequel l'arbre de sortie est agencé pour fournir une sortie d'énergie cinétique pour entraîner la charge, l'énergie cinétique provenant d'une poulie entraînée du dispositif de transmission à variation continue (100), ou d'une poulie entraînée du train de poulies de transmission de décalage faible (102), étant transmise par l'arbre de sortie à la charge.

5. Dispositif de transmission selon l'une quelconque des revendications précédentes, dans lequel le dispositif de transmission unidirectionnelle (111) est du type à direction radiale ou du type à direction axiale et comprend un palier unidirectionnel ayant une fonction de transmission unidirectionnelle, un embrayage unidirectionnel ou un mécanisme de transmission unidirectionnelle, ledit dispositif de transmission unidirectionnelle (111) étant installé entre l'arbre d'entrée (101) et la poulie d'entraînement du train de poulies de transmission de décalage faible (102), ou entre la poulie entraînée du train de poulies de transmission de décalage faible (102) et l'arbre de sortie (103).

6. Dispositif de transmission selon l'une quelconque des revendications précédentes, dans lequel, lorsque la vitesse de rotation de l'arbre d'entrée (101) est supérieure à celle de la poulie d'entraînement du train de poulies de transmission de décalage faible (102) dans le même sens de rotation, l'énergie cinétique de rotation est transmise à la poulie d'entraînement du train de poulies de transmission de décalage faible (102) et, lorsque la vitesse de rotation n'est pas supérieure à celle de la poulie d'entraînement du train de poulies de transmission de décalage faible, l'énergie cinétique de rotation provenant de l'arbre d'entrée (101) n'est pas transmise à la poulie d'entraînement du train de poulies de transmission de décalage faible (102).

7. Dispositif de transmission selon l'une quelconque des revendications précédentes, dans lequel le train de poulies de transmission de décalage faible (102) comprend une poulie d'entraînement qui est entraînée par l'arbre d'entrée (101) et une poulie entraînée pour entraîner l'arbre de sortie (103), ladite poulie d'entraînement et ladite poulie entraînée étant transmises dans le même sens de rotation ; et le rapport de vitesse de transmission de celui-ci faisant apparaître une transmission de décalage faible dans une transmission de décélération par rapport au dispositif de transmission à variation continue du type à arbres différents (100), et la relation de rapport de vitesse entre le train de poulies de transmission de décalage faible (102) et le dispositif de transmission à variation continue du type à arbres différents (100) étant :
1) Rapport de vitesse de la poulie d'entraînement pour entraîner la poulie entraînée du train de poulies de transmission de décalage faible (102) ≤ rapport de vitesse du dispositif de transmission à variation continue du type à arbres différents (100) en sortie de vitesse faible ;
2) Rapport de vitesse du dispositif de transmission à variation continue du type à arbres différents (100) en sortie de vitesse faible < Rapport de vitesse de la poulie d'entraînement pour entraîner la poulie entraînée du train de poulies de transmission de décalage faible (102) < rapport de vitesse du dispositif de transmission à variation continue du type à arbres différents (100) en sortie de vitesse élevée.

8. Dispositif de transmission selon l'une quelconque des revendications précédentes, dans lequel le train de poulies de transmission de décalage faible (102) comprend un ou plusieurs de ce qui suit :
- une poulie à chaîne d'entraînement, une poulie à chaîne entraînée et une chaîne de transmission montée ;
- une poulie d'entraînement, une poulie entraînée centrale et une poulie entraînée, lesdites poulie d'entraînement, poulie entraînée centrale et poulie entraînée comprenant des structures par engrenages ou poulies à friction ;
- un train d'engrenages à engrènement intérieur ou un train de poulies à friction intérieure comprenant une poulie de transmission de diamètre extérieur plus petit et une poulie de transmission par l'intérieur de diamètre extérieur plus grand ; et
- une poulie à courroie d'entraînement, une poulie à courroie entraînée et une courroie de transmission montée, telle qu'une courroie en toile, une courroie en acier ou une courroie articulée.

9. Dispositif de transmission avec train de poulies de transmission de décalage faible selon l'une quelconque des revendications précédentes, comprenant un arbre d'entrée (101) du dispositif de transmission à variation continue du type à arbres différents (100) qui est de plus installé avec une poulie d'entraînement du train de poulies de transmission de décalage faible (102), et un dispositif de transmission unidirectionnelle (111) est en outre installé entre les deux ; le sens de transmission dudit dispositif de transmission unidirectionnelle (111) doit permettre audit dispositif de transmission à variation continue du train de poulies de transmission de décalage faible (102) de garantir que : pendant un fonctionnement à charge plus élevée, si un dispositif de transmission à variation continue du type à décélération est adopté par le dispositif de transmission à variation continue du type à arbres différents (100) pour fonctionner avec un rapport de vitesse de décélération maximal ou un état de rapport de vitesse de décélération presque maximal, ou si un dispositif de transmission à variation continue du type à accélération est adopté pour fonctionner avec un rapport de vitesse d'accélération minimal ou un état de rapport de vitesse de décélération presque minimal, pour ainsi amener la vitesse de rotation de la poulie d'entraînement du train de poulies de transmission de décalage faible (102) à être inférieure à celle de l'arbre d'entrée (101) dans le même sens de rotation, puis l'énergie cinétique de rotation de l'arbre d'entrée (101) est transmise au moyen du dispositif de transmission unidirectionnelle (111) et du train de poulies de transmission de décalage faible (102) pour entraîner l'arbre de sortie (103) ainsi que pour entraîner la charge ; dans ledit état, la puissance transmise à l'origine directement au moyen dudit dispositif de transmission à variation continue du type à arbres différents (100) est changée pour être transmise au moyen dudit train de poulies de transmission de décalage faible (102) pour entraîner en outre l'arbre de sortie (103) ; pendant un fonctionnement à charge plus faible, la puissance est directement transmise au moyen dudit dispositif de transmission à variation continue du type à arbres différents (100) pour entraîner l'arbre de sortie (103).

10. Dispositif de transmission avec train de poulies de transmission de décalage faible selon l'une quelconque des revendications précédentes, dans lequel, si un dispositif de transmission unidirectionnelle (111) est choisi pour être installé entre la poulie entraînée du train de poulies de transmission de décalage faible (102) et l'arbre de sortie (103), alors pendant un fonctionnement à charge plus élevée, si un dispositif de transmission à variation continue du type à décélération est adopté par le dispositif de transmission à variation continue du type à arbres différents (100) pour fonctionner avec un rapport de vitesse de décélération maximal ou un état de rapport de vitesse de décélération presque maximal, ou si un dispositif de transmission à variation continue du type à accélération est adopté pour fonctionner avec un rapport de vitesse d'accélération minimal ou un état de rapport de vitesse de décélération presque minimal, pour ainsi amener la vitesse de rotation de la poulie entraînée du train de poulies de transmission de décalage faible (102) à être supérieure à celle de l'arbre de sortie (103) dans le même sens de rotation, ensuite l'énergie cinétique de rotation est transmise au moyen du train de poulies de transmission de décalage faible (102) et du dispositif de transmission unidirectionnelle (111) pour entraîner l'arbre de sortie (103) ainsi que pour entraîner la charge ; dans ledit état, la puissance transmise à l'origine directement au moyen dudit dispositif de transmission à variation continue du type à arbres différents (100) est changée pour être transmise au moyen dudit train de poulies de transmission de décalage faible (102) pour entraîner en outre l'arbre de sortie (103) ; pendant un fonctionnement à charge plus faible, la puissance est directement transmise au moyen dudit dispositif de transmission à variation continue du type à arbres différents (100) pour entraîner l'arbre de sortie (103).

11. Dispositif de transmission avec train de poulies de transmission de décalage faible selon l'une quelconque des revendications précédentes, dans lequel, dans un souci d'efficacité, lorsque les diamètres de la poulie d'entraînement et de la poulie entraînée dans le dispositif de transmission à variation continue du type à arbres différents (100) dudit dispositif de transmission à variation continue avec train de poulies de transmission de décalage faible sont plus similaires l'un à l'autre pour garantir une meilleure efficacité, une poulie de transmission centrale pour rapport de vitesse d'accélération ou rapport de vitesse de décélération peut être installée pour satisfaire les besoins pour un rapport de vitesse d'accélération ou un rapport de vitesse de décélération afin de garantir une meilleure efficacité de transmission, ladite poulie de transmission centrale comprenant :
1) Un train de poulies de changement de vitesse (302) est en outre installé entre l'arbre d'entrée (101) et la poulie d'entraînement du dispositif de transmission à variation continue du type à arbres différents (100) pour changer le rapport de vitesse total de l'arbre d'entrée (101) et de l'arbre de sortie (103), et correspond au sens de rotation requis ;
2) Un train de poulies de changement de vitesse (402) est en outre installé entre l'arbre de sortie (103) et la poulie entraînée du dispositif de transmission à variation continue du type à arbres différents (100) pour changer le rapport de vitesse total de l'arbre d'entrée (101) et de l'arbre de sortie (103), et correspond au sens de rotation requis ;
3) Les trains de poulies de changement de vitesse (302, 402) sont installés simultanément entre l'arbre d'entrée (101) et la poulie d'entraînement du dispositif de transmission à variation continue du type à arbres différents (100) et entre l'arbre de sortie (103) et la poulie entraînée du dispositif de transmission à variation continue du type à arbres différents (100) pour changer le rapport de vitesse total de l'arbre d'entrée (101), par l'intermédiaire du dispositif de transmission à variation continue du type à arbres différents (100), à l'arbre de sortie (103), et correspondent au sens de rotation requis.

12. Dispositif de transmission avec train de poulies de transmission de décalage faible selon l'une quelconque des revendications précédentes, dans lequel le train de poulies de transmission de décalage faible peut être choisi selon les exigences d'application pour comprendre un ou plusieurs des méthodes de constitution suivantes :
1) Constitution par un train de poulies de transmission de décalage faible, à étage unique, de rapport de vitesse fixe ;
2) Constitution par un train de poulies de transmission variable de décalage faible, du type à étages multiples, de sélection manuelle ou de transmission automatique.
